# EUROPÄISCHE PATENTSCHRIFT

(11) **EP 3 524 939 B1**
(45) Veröffentlichungstag und Bekanntmachung des Hinweises auf die Patenterteilung: **24.02.2021**
(21) Anmeldenummer: 18195418.1
(22) Anmeldetag: 19.09.2018
(51) Int. Cl.: G01D 5/244, G01D 21/00, G08C 25/00

(54) **VERFAHREN ZUR DATENÜBERTRAGUNG ZWISCHEN EINEM ENCODER UND EINER MOTOR- UND/ODER AKTOR-KONTROLLEINHEIT ÜBER EINEN UNSICHEREN KANAL**
METHOD FOR TRANSMITTING DATA BETWEEN AN ENCODER AND OF A MOTOR AND/OR ACTUATOR CONTROL UNIT OVER AN INSECURE CHANNEL
PROCÉDÉ DE TRANSMISSION DE DONNÉES ENTRE UN CODEUR ET UNE UNITÉ DE COMMANDE DE MOTEUR ET / OU D'ACTIONNEUR PAR L'INTERMÉDIAIRE D'UN CANAL NON SÉCURISÉ

(30) Priorität: 08.02.2018 DE 102018102788
(43) Veröffentlichungstag der Anmeldung: 14.08.2019
(73) Patentinhaber: Hengstler GmbH, 78554 Aldingen (DE)
(72) Erfinder: BÜCHER, Johann, 78554 Aldingen (DE); LINDEN, Martin, 78166 Donaueschingen (DE); KLAIBER, Wolfgang, 78595 Hausen (DE)
(74) Vertreter: Riebling, Peter

(56) Entgegenhaltungen:
- EP-A1- 2 098 930
- US-A1- 2008 176 530
- US-A1- 2010 201 373

## Beschreibung

Die Erfindung betrifft ein Verfahren und eine Vorrichtung zur Datenübertragung zwischen einem Encoder und einer Motor-Kontrolleinheit und/oder einer Aktor-Kontrolleinheit nach dem Oberbegriff des Patentanspruches 1.

Mit der auf den gleichen Anmelder zurückgehenden EP 2 867 624 B1 wird ein mehrkanaliger Drehwinkelgeber beschrieben, der ebenfalls zur Übertragung von Daten zwischen einem Encoder und einer nachgeschalteten Kontrolleinheit geeignet ist, wobei eine sichere Übertragung dadurch erfolgt, dass die vom Positionswandler erzeugten absoluten und/oder inkrementalen Positionswerte mithilfe eines Interpolationsbausteins und einem Quadraturencoderinterface in zueinander redundante Lagepositionen umgerechnet werden, die auf zwei parallelen Kanälen als sichere Daten der Kontrolleinheit zugeführt werden.

Nachteil des bekannten Verfahrens zum Betrieb des mehrkanaligen Drehwinkelgebers ist allerdings der erhöhte Aufwand bei der Erzeugung von zueinander redundanten Lagepositionen, die über zwei Kanäle als sichere Daten einer Kontrolleinheit zugeführt werden.
Ein erhöhter Aufwand ist dadurch gegeben, dass auf der gesamten Übertragungsstrecke die Datenintegrität der übertragenen Daten überprüft und sichergestellt werden muss, was mit einem relativ hohen Aufwand der hierfür verwendeten Bauteile verbunden ist.

Die EP 2 148 178 B1 beschreibt ein Verfahren zur digitalen, bidirektionalen Datenübertragung zwischen einer Steuereinheit und einem Positionsmesssystem, wobei bestimmte Frames einer vorgegebenen Bitlänge übertragen werden.
Es ist eine Anzahl von seriellen hintereinandergeschalteten Verarbeitungseinheiten vorhanden, welche Teile des gesamten Datenvolumens in voneinander getrennten Zyklen in verschiedenen Frames übermitteln. Nachteile dieser Anordnung ist, dass eine lange Datenübertragungsdauer in Kauf zu nehmen ist, und dadurch die Fehlerhäufigkeit durch externe Einflüsse, die auf diese Signalkette einwirken könnten, steigt.
Es ist im Übrigen aufgrund der vielen Übertragungszyklen, die seriell hintereinander erfolgen, eine verzögerte Reaktionszeit zu vergegenwärtigen. Aus dieser Druckschrift ergibt sich nicht die Möglichkeit, dass Daten auf unsicheren Datenkanälen übertragen werden könnten. Zwar ist im Rahmen der sequenziellen Übertragung auch eine Überprüfung der Qualität der übertragenen Daten vorhanden, wobei jedoch unklar ist, ob die angegebene Qualitätsprüfung ausreicht, um den erhöhten Ansprüchen bei der Datenübertragung über unsichere Kanäle zu genügen.

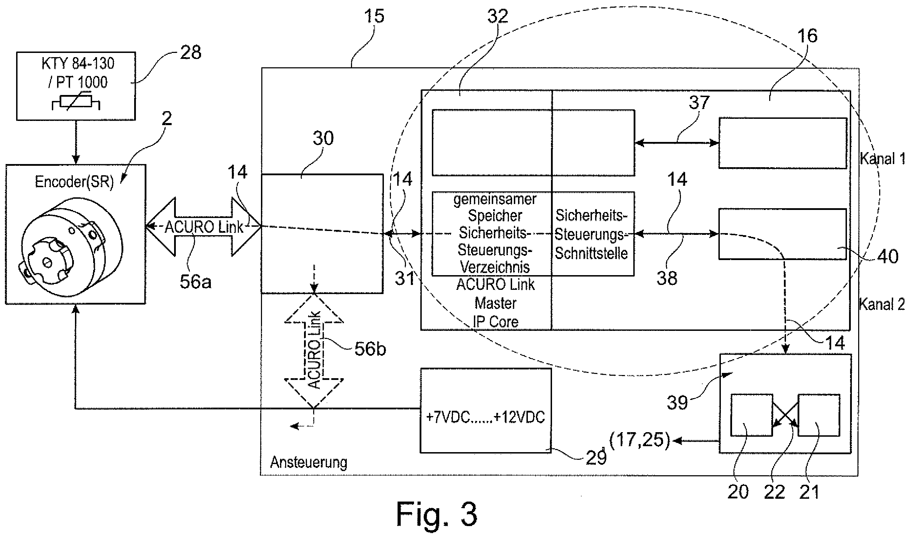

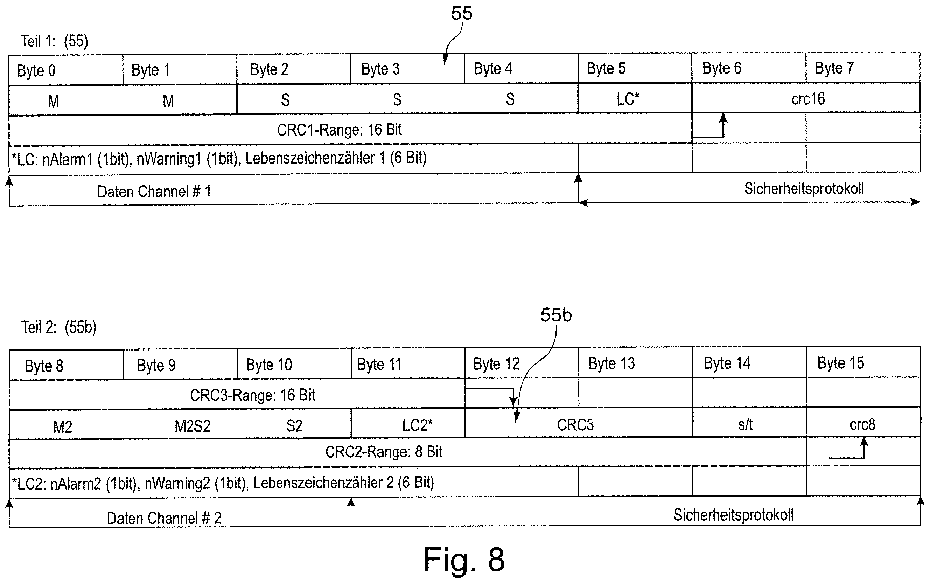

In der US 2010/02001373 A1 wird die Pulsweite einer Periode mit der Pulsweite der nachfolgenden Periode verglichen, um so eine Aussage über die Integrität der Daten zu erhalten.
Diese Fehlerkorrekturmechanismen ergeben sich aus den Figuren 3, 5, 6 und 7 und die dazugehörende Fehler- oder Auswertematrix ist in Figur 8 beschrieben.

Die US 2010/02001373 A1 verwendet keine Positionsdaten eines Positionswandlers, sondern überträgt lediglich A/B-Inkrementalsignale eines Pulsencoders. Es werden jedoch keine positionsgewandelten Daten übertragen. Unter dem Begriff A/B-Inkrementalsignale versteht die genannte Druckschrift eine Positionsänderung, nicht aber eine Angabe über die tatsächliche Position eines Gegenstandes. Somit können keinerlei Positionsdaten übertragen werden, weil ein Positionswandler fehlt.

Die genannte Druckschrift offenbart auch keinen schwarzen Kanal, nachdem in der Figur 9 lediglich ein Blockschaltbild eines Encoders und ein "control device" und ein Kabel 20 dargestellt sind. Die Anordnung eines "schwarzen Kanals", wie es bei der vorliegenden Erfindung vorgesehen ist, fehlt.

Der Unterschied zwischen einem erfindungsgemäßen "schwarzen Kanal" und der einfachen Leitungsführung in der US 2010/02001373 A1 ist, dass bei der Erfindung ein schwarzer (=unsicherer) Kanal noch mit einem zusätzlichen Sicherungslayer überlagert ist, was bedeutet, dass der Sicherungslayer noch zusätzliche Daten über die Integrität und Sicherheit der über den schwarzen Kanal übertragenen Daten zur Verfügung stellt, d. h. also Redundanz erzeugt, während dies bei der Druckschrift US 2010/02001373 A1 gerade nicht der Fall ist.

In der genannten Druckschrift fehlen deshalb die Merkmale eines schwarzen Kanals und die Merkmale einer Positionswandlung

Die Druckschrift US 2008/0176530 A1 bezieht sich auf eine Zweikanal-Methode für die Überwachung eines Ausgangssignals, das sich unter Einwirkung von Eingangssignalen verändert.
Es ist eine Signalquelle 10 vorhanden, welche die Signale A, B über zwei verschiedene Kanäle D1 und D2 getrennt voneinander überträgt.

Es handelt sich nur um eine redundante, zweikanalige Übertragung gleicher Signale, wobei jedoch kein schwarzer Kanal vorhanden ist, der einen zusätzlichen Sicherungslayer beinhaltet.

Auch die Figur 2 der genannten Druckschrift geht darüber über diesen Unterschied nicht hinaus, denn in der Figur 2 werden nur die invertierten Signale AB über den einen Kanal und die Signale BA über den anderen Kanal übertragen und am Ausgang miteinander verglichen.

Daher ist diese Übertragung von Analogsignalen aus einer einzigen Signalquelle, wie es dort beschrieben ist. Die Druckschrift definiert keine Datenübertragung über gesicherte Protokolle von unabhängigen Positionsdaten, die über ein Übertragungsmedium unter Verwendung eines sogenannten schwarzen Kanals übertragen werden, der eine bestimmte zusätzliche Fehlerüberwachung durchführt.

In der US 2008/0176530 A1 werden demnach keine Positionsdaten übermittelt, sondern Analogdaten, die dann durch interne AD-Converter in digitale Daten umgesetzt werden und durch zwei parallel betriebene Mikroprozessoren miteinander verglichen werden. Es handelt sich also um Positionsänderungen, nicht aber um Positionsdaten.

EP 2 098 930 A1 offenbart eine Vorrichtung zur Datenübertragung zwischen einem Drehgeber und einer Motor- und/oder Aktor-Kontrolleinheit vorzugsweise über eine Hiperface®-Schnittstelle, wobei an der Hiperface®-Schnittstelle eine Überwachungseinheit angeschlossen ist, die den Systemzustand und die Integrität der Datenübertragung überwacht und im Falle eines Fehlers die motorseitige Motor-Kontrolleinheit ansteuert.

Der Erfindung liegt ausgehend von der US 2010/02001373 A1 die Aufgabe zugrunde, ein Verfahren zur Datenübertragung zwischen einem Encoder und einer nachgeschalteten Verarbeitungseinheit so weiterzubilden, dass bei einer schnelleren Übertragungszeit mit wesentlich geringerem Aufwand von Schaltungsbausteinen eine höhere Übertragungsqualität ermöglicht wird.

Zur Lösung der gestellten Aufgabe ist die Erfindung durch die technische Lehre des Anspruches 1 gekennzeichnet.

Bei der Übertragung von Positionsdaten, wie es die vorlegende Erfindung anstrebt, werden wesentlich höhere Anforderungen an die Datenqualität gestellt, weil zu jedem Zeitpunkt die absolute Position des Drehgebers geprüft werden muss, was gerade bei den genannten Druckschriften nicht der Fall ist.

Nach der technischen Lehre des Anspruchs 1 erfolgt eine Datenübertragung von Positionsdaten, die von einem Positionswandler ausgehen. In der Druckschrift US 2010/0201373 A1 werden jedoch nur A/B Inkrementalsignale durch den dort gezeigten Pulse Encoder übertragen, aus denen sich nicht ohne weitere Verrechnungen absolute Positionssignale ableiten lassen.
In der US 2010/0201373 A1 ist außerdem keine Positionswandlung vorhanden. Dies ist im Unterschied zur Erfindung.

Der in der vorliegenden Erfindungsbeschreibung verwendete Begriff eines "unsicheren Kanals" wird wie folgt definiert:
Es handelt sich demnach vorzugsweise um ein nicht-sicheres Protokoll, welches durch Sicherheitsmerkmale erweitert wird, und diese Sicherheitsmerkmale werden in einer separaten Sicherheitsanwendung überprüft:
Die Druckschrift US 2010/0201373 A1 zeigt in Figur 9 lediglich A, B Analogsignale, die in keiner Weise überprüft werden. Hier setzt die Erfindung ein, die bevorzugt ein Protokoll mit Positionsdaten und mit zusätzlichen Sicherheitsmerkmalen (Lifecounter, CRC etc) definiert.

Die Mehrkanaligkeit des unsicheren Kanals nach der Erfindung wird u.a. durch voneinander unabhängigen Positionen Pos#1 und Pos#2 aus dem Positionswandler 5 begründet.

Demnach bezieht sich die erfindungsgemäße Mehrkanaligkeit nicht auf Anzahl der Leitungen im Kabel, sondern auf die Anzahl der voneinander unabhängig ermittelten Positionen.

Im Gegensatz hierzu können die Inkrementalsignale A/B aus der US 2010/0201373 A1 nicht als zueinander redundant und nicht voneinander unabhängig betrachtet werden, vielmehr sind diese Signale zwangsläufig einkanalig, da der Signalursprung auf eine nicht redundante Quelle zurückzuführen ist. Gerade die in der US 2010/0201373 A1 beschriebenen Überwachungsfunktionen im "anormaly monitoring device" sind auf die gegenseitige Abhängigkeit der Signale angewiesen. Dies ist im Gegensatz zur Erfindung.

Sogenannte "Common Cause Fehler", welche auf Störungen allgemeiner Art beruhen, können systembedingt in der US 2010/0201373 A1 nicht aufgedeckt werden.

Die gleiche Kritik, die zur US 2010/0201373 A1 erwähnt wurde, gilt auch für die US 2008/0176530 A1. Es werden Analogsignale aus einer Signalquelle mehreren Übertragungsmedien zugefügt. In der vorliegenden Erfindung werden hingegen gesicherte Protokolle mit unabhängigen Positionsdaten über ein Übertragungsmedium übertragen.

Erfindungsgemäß ist der mehrkanalige Kanal als schwarzer Kanal ausgebildet, der einen nicht-sicheren Übertragungskanal ausbildet, der von einer übergeordneten oder nachgeschalteten Instanz überprüft wird,
wobei der schwarze Kanal mit seinem nicht-sicheren Protokoll von einem zusätzlichen Sicherungsprotokoll überlagert ist, und
wobei das Sicherungsprotokoll zusätzliche Daten, vorzugsweise über die Integrität und Sicherheit der über den schwarzen Kanal übertragenen Daten an zwei voneinander unabhängige Auswerteeinheiten übermittelt, die eine überprüfbare Redundanz erzeugen, die in einem nachgeschalteten Funktionsbaustein ausgewertet wird.

Es wird ferner bevorzugt, dass sich der schwarze Kanal durchgängig von der Positionswandlung bis zur sicheren Auswertung erstreckt und Störungen allgemeiner Art auch innerhalb des Encoders und innerhalb der motorsteuerungsseitigen Logik aufdecken kann.

Weiteres Merkmal der Erfindung ist, dass die Datenübertragung zwischen einem Encoder und einer nachgeschalteten Verarbeitungseinheit durch einen unsicheren Kanal erfolgt, und dass bei dieser über einen unsicheren Kanal erfolgende Datenübertragung stromabwärts oder am Ausgang des unsicheren Kanals eine sichere Auswerteeinheit angeordnet ist, weiche die Daten des unsicheren Kanals überprüft und erst bei Bestätigung der Sicherheit der überprüften Daten eine nachgeschaltete Motoreinheit ansteuert.

Vorteil der Erfindung ist, dass die Daten des Encoders über eine Übertragungsstrecke mehrkanalig übertragen werden können, die unsicher ist, das heißt, es können dort äußere Einflüsse (Störungen) einwirken, ohne dass die Notwendigkeit besteht, bereits schon im Bereich dieser Datenübertragung eine Überprüfung der übertragenen Daten auf Integrität und Datensicherheit zu bewerkstelligen.

Beispiele für Übertragungsfehler auf dem unsicheren Kanal sind auf der Ebene der Protokollpakete in einem nicht-sicheren Kanal folgende:
1. Wiederholung
2. Verlust
3. Einfügung
4. falsche Abfolge
5. Verfälschung
6. Verzögerung
7. Vermischen von sicheren und nicht-sicheren Telegrammen.

Unter einem unsicheren Kanal wird ein "Black Channel"-Prinzip zur Kommunikation in sicherheitsgerichteten Systemen verstanden.

Der Black Channel ("schwarzer Kanal") ist demnach ein nicht-sicherer Übertragungskanal, der von einer übergeordneten oder nachgeschalteten Instanz überprüft wird.

Es handelt sich zum Beispiel um ein nicht-sicheres Protokoll, welches durch Sicherheitsmerkmale erweitert wird, und diese Merkmale (Sicherheitsanwendung) werden in einer Anwendung überprüft.

Vorteil der Verwendung eines unsicheren Kanals ist demnach die Freiheit der Übertragung von Daten zwischen einem Encoder und einer nachgeschalteten Motor-Kontrolleinheit, ohne die Notwendigkeit der Verwendung von aufwendigen Funktionsbausteinen, die während der gesamten Übertragung die Integrität und die Sicherheit der Daten überprüfen.

Erfindungsgemäß erfolgt dies erst am Ende der Übertragungsstrecke, nämlich erst dann, wenn am Ausgang des unsicheren Kanals eine sogenannte sichere Auswerteeinheit angeordnet ist, die mindestens zweikanalig ausgebildet ist und im Bereich der zweikanalig ausgebildeten Auswerteeinheit noch zusätzlich ein Kreuzvergleich der Kanäle stattfindet. Die genannte zweikanalige Ausbildung bezieht sich jedoch nicht auf Anzahl der Leitungen im Kabel, sondern auf die Anzahl der voneinander unabhängig ermittelten Positionen.

Für die folgende Beschreibung gilt im Übrigen, dass die Ausbildung der Auswerteeinheit mit zwei Kanälen bevorzugt wird. Die Erfindung ist jedoch nicht auf eine zweikanalige Ausbildung beschränkt. Es können daher auch mehr als zwei Kanäle verwendet werden. Insbesondere können wegen des vorteilhaften Kreuzvergleichs der Kanäle eine geradzahlige Anzahl von Kanälen verwendet werden. Selbst wenn in der vorliegenden Beschreibung von einer zweikanaligen Ausbildung die Rede ist, ist dies im Sinn der vorstehenden Definition nicht als beschränkend zu verstehen.

Erst wenn alle Signale der beiden Auswerteeinheiten und der dazwischengeschalteten Kreuzvergleichseinheit übereinstimmen, erfolgt ein "Gutbefund" am Ausgang der sicheren Auswerteeinheit, und erst dann wird die nachgeschaltete Motoreinheit angesteuert.

Nach einer bevorzugten Ausgestaltung der Erfindung besteht die sichere Auswerteeinheit am Ende oder am Ausgang des unsicheren Kanals aus einer Reihe von Kontrollabfragen, die mit bestimmten Resultaten einer Überprüfungseinheit erfüllt werden müssen. Erst wenn alle vorhandenen Kontrollabfragen kumulativ erfüllt worden sind, kommt es zu einem "Gutbefund" als Ausgangssignal am Ausgang der sicheren Auswerteeinheit, und damit erfolgt eine Durchschaltung der nunmehr als sicher erkannten Daten auf den Encoder.

Vorteil dieses erfindungsgemäßen Verfahrens ist demnach, dass über eine sehr lange Übertragungsstrecke eine unsichere Datenübertragung mit hoher Geschwindigkeit stattfinden kann, und dass erst am Ausgang dieser Strecke eine Überprüfung dieser Daten stattfindet.

Im Gegensatz zu einem üblichen Standardprotokoll, bei dem nur Positionsdaten übertragen werden, ist bei der Erfindung vorgesehen, dass weitere Daten übertragen werden, um Übertragungsfehler zu entdecken.

Solche Daten sind zum Beispiel:
1. Lebenszeichenzähler (LC) oder
2. CRC-Daten (zyklische Redundanz Prüfungsdaten)
3. Darüber hinaus können noch Fehlerbits und Warnbits übertragen werden, die alle im Datenübertragungstelegramm enthalten sind.
4. Ebenso werden Verzögerungen der Daten geprüft, indem die Übermittlung der Daten in festgelegten Zeitfenstern gefordert wird. Wird das Zeitfenster überschritten, wird ein Fehler festgestellt und die Übermittlung abgebrochen.
5. Dies gilt auch für den Verlust von Daten, der ebenfalls zu einer Fehlermeldung und bei einer entsprechenden Einstufung zu einem Abbruch der Übertragung führt.

In einer ersten Ausgestaltung der Erfindung ist vorgesehen, dass ausgehend von einem mechanischen Interface (Getriebe, Motorwelle) eines Motorsystems ein Encoder angetrieben wird, der beispielsweise als optischer Encoder ausgebildet ist. Hierauf ist die Erfindung nicht beschränkt. Es kann jeder beliebige Encoder verwendet werden, wie zum Beispiel auch magnetische oder induktive oder kapazitive Encoder.

Hierbei erfolgt eine Umwandlung der vom Decoder gewonnenen Positionswerte bevorzugt über zwei voneinander getrennte Kanäle, die beide auf ein elektrisches Interface geschaltet sind, welches Teil des Encodersystems ist.

Wichtig ist nun, dass am Ausgang des encoderseitigen Interfaces nunmehr ein unsicherer Kanal angeschlossen ist, der als Zwei- oder Vierdrahtleitung ausgebildet sein kann, und der auf die motorseitige Motor-Kontrolleinheit geschaltet ist.

Dabei ist es gleichgültig, wie lang der unsichere Kanal ist und wie lang die Zwei- oder Vierdrahtleitung ausgebildet ist, weil es nicht darauf ankommt, ob über diese Zwei- oder Vierdrahtleitung Fehler eingeschleust werden oder nicht, nachdem diese Fehler später in der Auswerteeinheit festgestellt werden.

Vorteilhaft ist, dass die Fehleranalyse in der Motor-Kontrolleinheit stattfindet, und zwar in einem dort angeordneten speziellen Auswertemodul.

Die Anordnung der sicheren Auswerteeinheit auf der Motorseite ist besonders vorteilhaft, weil die Datenübertragung zwischen der Encoderseite und der Motor-Kontrolleinheit nun erfindungsgemäß über den unsicheren Kanal über beliebige Längen und Medien erfolgen kann.

Eine solche Übertragungslänge kann 100 Meter oder mehr sein.

In einer weiteren Ausgestaltung der Erfindung ist es vorgesehen, dass direkt am Ausgang des Encoders ein unsicherer Kanal durch das nachgeschaltete Master-Interface vorgesehen ist, und erst am Ausgang (=Ende) des unsicheren Kanals eine sichere Auswerteeinheit angeordnet ist, an deren Ausgang nunmehr die Motoreinheit angeordnet ist.

In einem zweiten Ausführungsbeispiel ist vorgesehen, dass sich der unsichere Kanal auch durch das elektrische Master-Interface hindurch erstreckt, und in diesem Master-Interface auch die sichere Auswerteeinheit integriert ist.

In einem dritten Ausführungsbeispiel ist vorgesehen, dass sich der unsichere Kanal auch durch die Motor-Kontrolleinheit hindurch erstreckt, und erst am Ausgang der Motor-Kontrolleinheit die erfindungsgemäße sichere Auswerteeinheit angeordnet ist, während in einem weiteren Ausführungsbeispiel das Master-Interface zusammen mit der Motor-Kontrolleinheit in einem einzigen Funktionsbaustein integriert ist, und am Ausgang dieses Funktionsbausteins nunmehr die erfindungsgemäße sichere Auswerteeinheit angeordnet ist.

Zur Erfüllung der Bedingungen der sicheren Auswerteeinheit werden in Ausführungsbeispielen unterschiedliche Kontrollabfragen vorgestellt, die alle kumulativ erfüllt werden müssen, ansonsten gibt die sichere Auswerteeinheit keine Freigabe für den nachgeschalteten Motor.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: ein Blockschaltbild einer Datenverbindung zwischen einem Encoder und einer Kontrolleinheit
Figur 2: das Blockschaltbild einer Datenverbindung zwischen einem Encoder und einer Motor-Kontrolleinheit mit Darstellung der Architektur innerhalb der Kontrolleinheit
Figur 3: ein weiteres Ausführungsbeispiel im Vergleich zu Figur 2, wobei bestimmte Funktionsbausteine miteinander vereinigt sind
Figur 4: ein gegenüber Figur 2 und Figur 3 abgewandeltes weiteres Ausführungsbeispiel
Figur 5: die Auflistung der kumulativ zu erfüllenden Kontrollabfragen in der sicheren Auswerteeinheit nach einem ersten Ausführungsbeispiel
Figur 6: ein gegenüber Figur 5 abgewandeltes zweites Ausführungsbeispiel
Figur 7: der Übertragungszyklus mit Angabe der übertragenen Daten innerhalb eines Zyklus
Figur 8: die Dateninhalte der in Figur 7 dargestellten Antwort-Telegramme für den Kanal Nummer 1 und den Kanal Nummer 2, und zwar unterteilt in Nutzdaten und Sicherheitsprotokolldaten
Figur 9: Blockschaltbild der Datenübertragung von einem funktional sicheren Drehgeber zu einer sicheren Auswerteeinheit

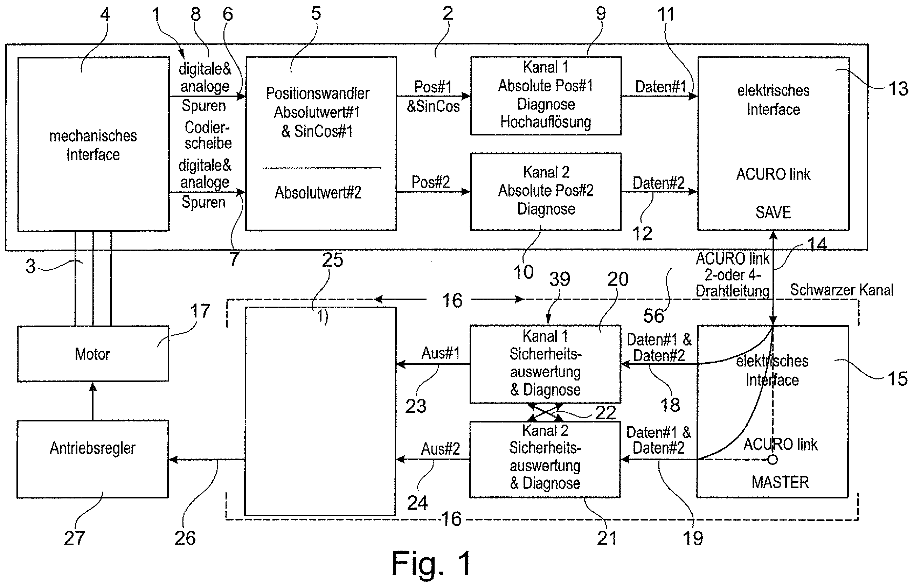

In Figur 1 ist allgemein die Systemarchitektur 1 einer Datenverbindung zwischen einem Encoder und einer Motor-Kontrolleinheit 41 dargestellt.

Aus Vereinfachungsgründen ist der später als Motor-Kontrolleinheit 41 dargestellte Funktionsbaustein auch stellenweise nur als Kontrolleinheit 16 bezeichnet, weil damit nicht nur ein Motor 17 ansteuerbar ist, sondern auch andere Ansteuerelemente.

Solche Ansteuerelemente könnten statt eines Motors beliebige Aktoren sein, wie zum Beispiel Hydraulikstempel, Zylinderantriebe und dergleichen mehr.

Wichtig ist, dass im oberen Bereich der Figur 1 das Blockschaltbild eines funktional sicheren Drehgebers 2 dargestellt ist, der im Wesentlichen aus dem mechanischen Interface 4 besteht, welches selbst ein Getriebe oder eine Antriebswelle sein kann, die drehfest mit einer beispielhaft vorhandenen optischen Codierscheibe 8 verbunden ist.

Die optische Codierscheibe erzeugt digitale und analoge Signale über geeignete digitale und analoge Spuren, und gemäß dem dargestellten Ausführungsbeispiel erfolgt die Übertragung auf zwei verschiedenen Spuren 6 und 7 auf einen nachgeschalteten Positionswandler 5.

In diesem Positionswandler 5 erfolgt die Erzeugung von absoluten Werten und inkrementalen Werte auf dem Kanal 1.

Davon getrennt werden weitere absolute Werte auf einem Kanal 2 erzeugt, die mit den absoluten Werten des Kanals 1 redundant sind.

Am Ausgang des Positionswandlers 5 erfolgt daher die Übertragung auf zwei verschiedenen Kanälen Nr. 1 und Nr. 2, wobei beispielhaft über den oberen Kanal Nr. 1 noch die inkrementalen Werte als Sinus-Kosinus-Werte mit übertragen werden, während auf dem unteren Kanal nur die absoluten Werte übertragen werden.

Diese zweikanalige Übertragung beschränkt die Erfindung nicht - siehe die oben genannte Definition.

Es können auch über mehr als zwei Kanäle absolute Werte übertragen werden, und ebenso über mehr als einen Kanal inkrementale Werte.

Wichtig ist, dass jedenfalls mindestens eine zweikanalige Übertragung auf einen nachgeschalteten Signalkanal 9 erfolgt, indem die absoluten Positionswerte zusammen mit Diagnostikwerten und zusätzlichen Informationen zur Erreichung einer Hochauflösung der absoluten Werte erzeugt werden.

Dies gilt sowohl für den oberen Kanal des Signalkanals 9 als auch für den unteren Kanal, indem beispielsweise die absoluten Werte noch mit weiteren diagnostischen Parametern versehen werden. Dies erfolgt im Bereich des Signalkanals 10.

Die beiden Signalkanäle 9, 10 bilden am Ausgang die Datenkanäle 11 und 12, die parallel zueinander gemeinsam auf ein elektrischen Interface 13 geschaltet sind, welches auf der funktionellen Drehgeberseite angeordnet ist und über ein bestimmtes Protokoll verfügt, welches - spezifisch für den Patentinhaber - als "ACURO link" bezeichnet ist.

Von diesem als Slave-Interface 13 geschalteten Interface erfolgt nun die erfindungsgemäße Übertragung über einen unsicheren Kanal 14, der auch als "Schwarzer Kanal" oder als "Black Channel" bezeichnet wird. Die Übertragung kann über eine Zwei- oder Vierdrahtleitung erfolgen, und es handelt sich um eine Datenübertragungsstrecke 56, die Längen bis zu 100 Metern oder mehr aufweisen kann. Wichtig ist, dass im Bereich des Drehgebers (Encoders) 2 keine Unterscheidung zwischen sicheren und unsicheren Daten gemacht wird, Daher können die im Drehgeber angeordneten Bauteile besonders kostengünstig und einfach konstruiert werden.

Ferner ist vorteilhaft, dass die Übertragung dieser Daten am Ausgang des Slave-Interface auf der Encoderseite nun über eine beliebige Länge erfolgen kann, und auch auf diesem unsicheren Kanal 14 Signaleinflüsse stattfinden können, die jedoch in einem späteren Verfahren erkannt und ausgeschlossen werden.

Auf der Seite der Kontrolleinheit 16 ist nun erfindungsgemäß ein Master-Interface 15 angeordnet, welches den Eingang für den unsicheren Kanal 14 bildet, wobei nach dem gezeigten Ausführungsbeispiel nach Figur 1 erfindungsgemäß der unsichere Kanal auch durch das Master-Interface 15 hindurchgeführt ist. Dies hat den Vorteil, dass auch im Master-Interface 15 auf der Motorüberwachungsseite keine sichere Übertragung stattfinden muss.

Der Ausgang des Master-Interface 15 hat zwei Datenkanäle 18, 19, wobei über den oberen Datenkanal 18 die Positionsdaten des ersten Kanals und des zweiten Kanals zusammen übertragen werden, während dies auf dem unteren Datenkanal ebenfalls in gleicher Weise redundant erfolgt.

Beiden Daten auf den Datenkanälen 18, 19 werden noch zusätzliche Sicherheitsprotokolldaten hinzugefügt, wie später noch erläutert werden wird.

Die Sicherheitsprotokolldaten werden den Signalkanälen 9 und 10 hinzugefügt, wie vorher bereits angegeben wurde.

Wichtig ist nun, dass die Übertragung der Daten über den unsicheren Datenkanal 14 nunmehr durch eine nachgeschaltete sichere Auswerteeinheit 39 überprüft wird.

Diese sichere Auswerteeinheit besteht aus einer mindestens zweikanaligen Auswerteeinheit 20, 21, wobei die Auswerteeinheiten 20, 21 im Wesentlichen gleich ausgebildet sind und eine identische Datenauswertungen vornehmen.

Nachdem auch am Eingang identische Daten eingetragen werden, erfolgt erfindungsgemäß zwischen den identisch arbeitenden Auswerteeinheiten 20 und 21 nach einem weiteren Merkmal der vorliegenden Erfindung ein Konvergenzvergleich über ein dort zwischengeschaltetes Kreuzvergleichsmodul 22, sodass mit diesem Kreuzvergleich und der getrennten Auswertung der gemeinsamen Daten Nr. 1 und Nr. 2 in den vollkommen funktionell getrennten Auswerteeinheiten 20, 21 stets sichergestellt ist, dass diese Daten unabhängig voneinander ausgewertet werden und erst in dem zwischengeschalteten Kreuzvergleichsmodul auf Synchronizität, Konvergenz und Identität verglichen werden.

Am Ausgang der erfindungsgemäßen, sicheren Auswerteeinheit 39 sind deshalb auch zwei Ausgangskanäle 23, 24 geschaltet, die unabhängig voneinander arbeiten und ebenfalls mindestens zweikanalig die als sicher erkannten Daten über die Ausgangskanäle 23, 24 mindestens zweikanalig einem Funktionsbaustein 25 zuführen, der direkt mit der Motorsteuerung in Verbindung steht.

In diesem Funktionsbaustein 25 werden die Motoransteuersignale gebildet, wie zum Beispiel Signale für
1. eine sichere Abschaltung,
2. eine sichere Begrenzung des Drehmomentes,
3. eine sichere Begrenzung der Geschwindigkeit,
4. eine sichere Begrenzung der Lage und
5. eine sichere Begrenzung der aktuellen Position.
6. Ebenso ist ein Sicherheitsstopp integriert.

Hieraus ergibt sich, dass die Motor-Kontrolleinheit 16, 41 nur dann angesteuert wird, wenn die über den unsicheren Kanal 14 übertragenen Daten am Ausgang der sicheren Auswerteeinheit 39 als sicher anerkannt sind und mindestens zweikanalig in den Funktionsbaustein 25 identisch übertragen wurden.

Am Ausgang des Funktionsbausteins 25 erfolgt dann über einen Abschaltkanal 26 die direkte Ansteuerung zum Beispiel des Antriebsreglers 27 oder anderer aktor- oder motorseitiger Antriebselemente, die der Einfachheit halber nicht gezeichnet sind.

Es wird noch der Vollständigkeit halber angegeben, dass der Motor 17 über eine mechanische Schnittstelle 3, zum Beispiel eine Antriebswelle, mit dem mechanischen Interface 4 verbunden ist. Damit ist beispielsweise eine Codescheibe gemeint, welche die Winkelposition der Welle codiert.

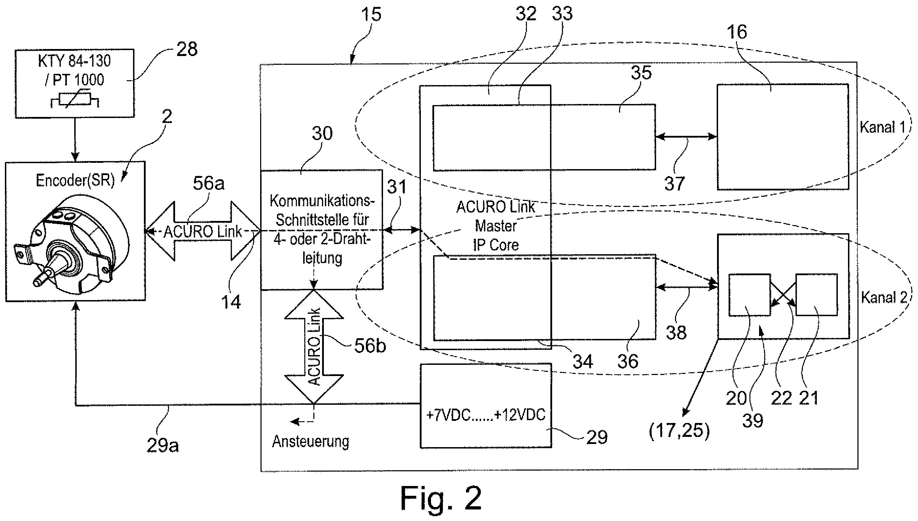

Figur 2 zeigt als erstes Ausführungsbeispiel die Master-Slave-Struktur eines Sicherheitskonzepts nach der Erfindung, wo angegeben ist, dass der sichere Drehgeber (Encoder) 2 zum Beispiel auch von einem Temperatursensor 28 angesteuert sein kann, und die Datenübertragung am Ausgang des Encoders 2 über eine Datenübertragungsstrecke 56a erfolgt, die bereits schon als unsicherer Kanal 14 ausgebildet ist.

Die Datenübertragungsstrecke 56a bildet den Eingang für einen Leitungstreiber 30, der entweder eine Zwei- oder Vierdrahtleitung ausbilden kann. Im Ausführungsbeispiel nach den Figuren 2, 3 und 4 sind zwei unterschiedliche Ausführungen dargestellt, die unabhängig voneinander funktionieren.

in den Figuren 2 bis 4 ist noch dargestellt, dass am Ausgang des Leitungstreibers 30 über die Datenübertragungsstrecke 56b Daten über den unsicheren Kanal 14 direkt auf den Encoder 2 zurückgeführt werden. Diese Ausführung kann jedoch auch entfallen oder allein vorhanden sein.

Es sind also zwei verschiedene Datenübertragungsmöglichkeiten gezeigt, nämlich die Datenübertragungsstrecke 56a und die Datenübertragungsstrecke 56b, wobei die Datenübertragungsstrecke 56a eine Vierdrahtübertragung und die Datenübertragungsstrecke 56b eine Zweidrahtübertragung ausbilden kann.

Der einfacheren Beschreibung wegen wird deshalb in der Folge die Datenübertragungsstrecke 56b nicht mehr weiter geschildert, weil diese optional in allen Ausführungsbeispielen der Figuren 2 bis 4 vorhanden sein kann.

Am Ausgang des Leitungstreibers 30 ist ein bidirektionaler Übertragungskanal 31 vorhanden, der den Eingang für einen nachgeschalteten Logik-Baustein 32 bildet.

Wichtig ist, dass der unsichere Kanal 14 durch die Datenübertragungsstrecke 56a, durch den Leitungstreiber 30 und durch den Logik-Baustein 32 hindurch geschaltet ist, sodass im Bereich der gesamten Datenübertragungsstrecke keinerlei Vorkehrungen für die Sicherstellung der Integrität der Daten vorgenommen werden müssen. Die Übertragung wird dadurch besonders schnell und dynamisch erfolgen.

Aus diesem Grund können die Bausteine 30, 32 besonders einfach und kostengünstig ausgebildet sein.

Der Logik-Baustein 32 besteht im Wesentlichen aus einem Speicherbereich 33, in dem die Speicherstellen für die Motorlagenansteuerung vorgehalten werden, während diese unmittelbar mit einem Interface 35 verbunden sind, welches über den Übertragungskanal 37 mit der Kontrolleinheit 16 verbunden ist.

Teil des Logik-Bausteins 32 ist auch noch ein Speicherbereich 34, der von beiden Seiten her zugreifbar ist, nämlich auch von der Seite des Safety-Control-Interface 36, welches seinerseits über einen bidirektionalen Übertragungskanal 38 mit der erfindungsgemäßen sicheren Auswerteeinheit 39 verbunden ist.

Erfindungsgemäß erstreckt sich der unsichere Kanal demzufolge vom Ausgang des Encoders bis zum Eingang der sicheren Auswerteeinheit 39, was bisher noch nicht bekannt war.

In der vorher beschriebenen Weise besteht die sichere Auswerteeinheit 39 aus zwei funktional voneinander getrennten Auswerteeinheiten 20, 21, zwischen denen das vorher genannte Konvergenzvergleichsmodul 22 angeordnet ist.

Unabhängig davon ist eine Stromversorgung 29 vorgesehen, über deren Leitung 29a der Encoder 2 angesteuert wird.

Das Ausführungsbeispiel nach Figur 3 unterscheidet sich vom Ausführungsbeispiel nach Figur 2 dadurch, dass eine andere Integrationsstufe im Bereich des motorseitig angeordneten Master-Interface vorhanden ist.

Dort ist gezeigt, dass im Bereich der motorseitigen Kontrolleinheit 16 zusätzlich ein weiterer Funktionsbaustein 40 angeordnet ist, der als Verbindungsglied zwischen den im Logik-Baustein 32 erzeugten sicheren Daten dient, die er (der Funktionsbaustein 40) über den unsicheren Kanal der sicheren Auswerteeinheit 39 zuführt.

Es handelt sich also um einen Interface-Baustein, der die Daten von dem Logik-Baustein 32 abfordert, und auf Anforderung an die sichere Auswerteeinheit 39 überträgt.

Hier ist ebenfalls wichtig, dass sich der unsichere Kanal 14 bis zum Eingang der sicheren Auswerteeinheit 39 erstreckt, die dann funktionell mit dem Ausführungsbeispiel der Figur 2 übereinstimmt.

Wenn man gemäß dem Ausführungsbeispiel nach Figur 3 aus einem unsicheren Antrieb einen sicheren Antrieb machen will, dann genügt es, einen Funktionsbaustein 40 vorzusehen, der sichere Daten von dem Logik-Baustein 32 abfordert und an den Eingang einer sicheren Auswerteeinheit 39 liefert.

Darin besteht der besondere Vorteil der Erfindung, dass auch herkömmliche, unsichere Datenübertragungen, wie sie mit dem unsicheren Datenkanal 14 in den Figuren 2, 3 und 4 dargestellt sind, in sichere Datenkanäle umgewandelt werden können, wenn am Ausgang oder am Ende des unsicheren Kanals eine erfindungsgemäße sichere, mehrkanalige Auswerteeinheit angeschlossen wird.

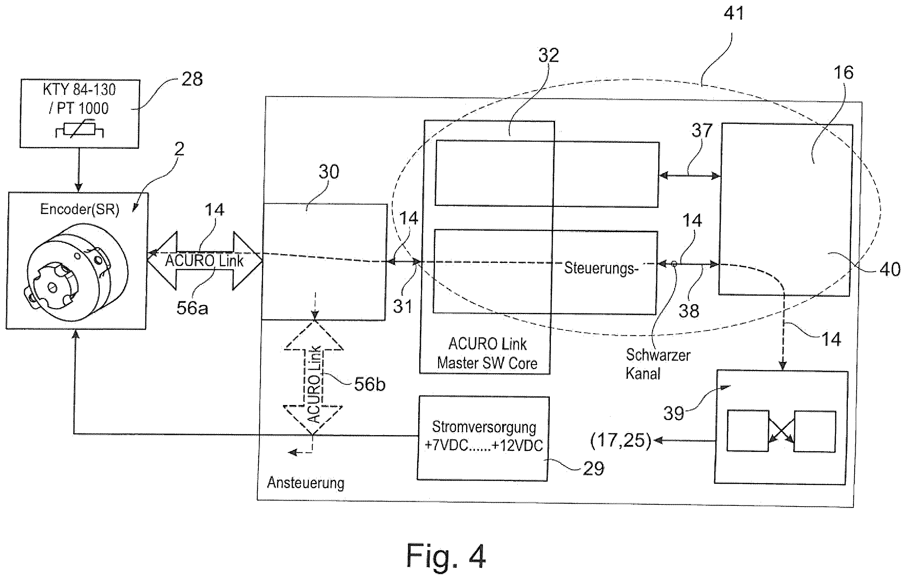

Dies ergibt sich auch aus dem Ausführungsbeispiel nach Figur 4, bei dem ein höherer Integrationsgrad der Motor-Interfacemodule dargestellt ist. Es ist dargestellt ist, dass nunmehr der Logik-Baustein 32 zusammen mit der motorseitigen Kontrolleinheit 16 und dem vorher erwähnten Funktionsbaustein 40 in der Motor-Kontrolleinheit 41 integriert sind.

Ansonsten gelten für die gleichen Teile die gleichen Bezugszeichen.

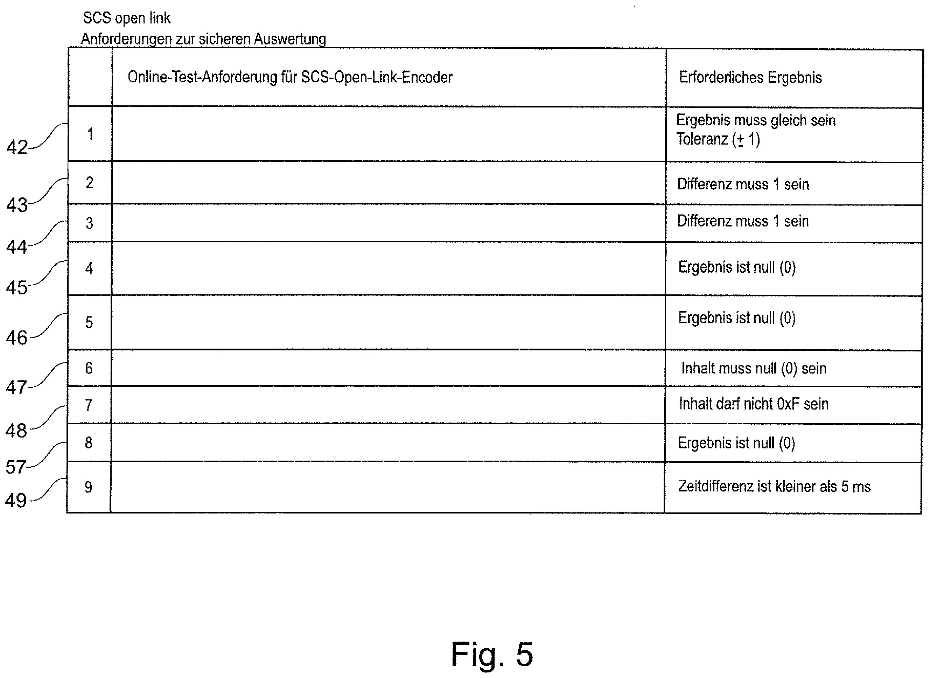

In Figur 5 ist in einem ersten Ausführungsbeispiel die Sicherheitsabfrage dargestellt, die innerhalb der sicheren Auswerteeinheit auf zwei voneinander getrennten Auswerteeinheiten 20, 21 erfolgt.

Statt der dargestellten zweikanaligen Auswertung mit zwei voneinander funktionell getrennten Auswerteeinheiten 20, 21 können auch drei oder mehr Auswerteeinheiten vorhanden sein.

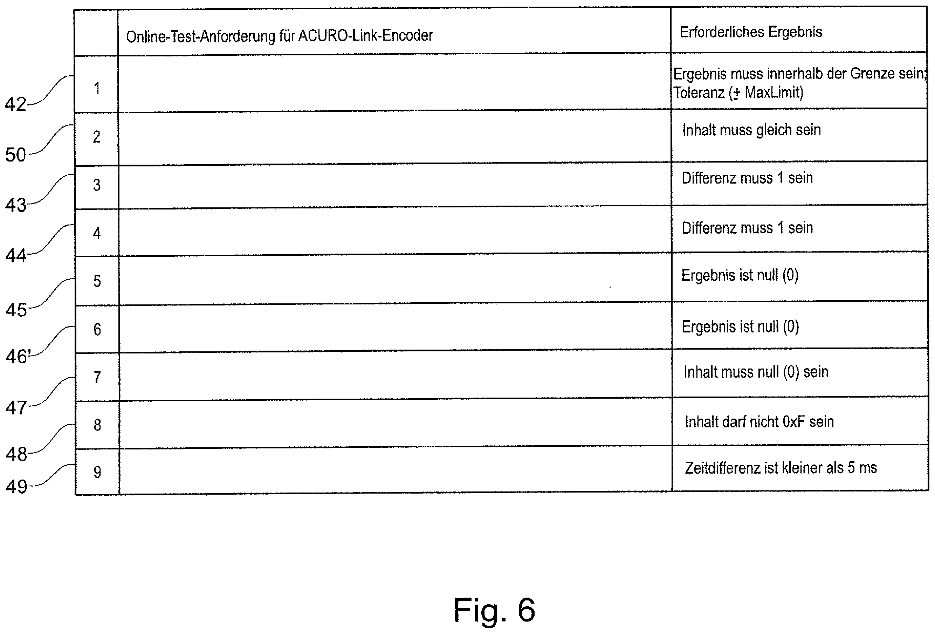

Die Figuren 5 und 6 zeigen eine Anzahl von Kontrollabfragen 42-50, 57, wobei als Beispiel in Figur 5 dargestellt ist, dass jede Auswerteeinheit 20, 21 folgende Kontrollabfragen durchführt:
1. In der Kontrollabfrage 42 erfolgt ein Vergleich der Lageposition des Kanals 1 mit der Lageposition des Kanals 2, die durch ein Sicherheits-Offset gegeneinander verschoben sind, und als gefordertes Ergebnis wird gefordert, dass das Ergebnis gleich sein muss.
2. In der Kontrollabfrage 43 wird der Lebenszeichenzähler LC1 mit dem Lebenszeichenzähler LC1* des letzten Zyklus abgefragt und miteinander verglichen, und die Differenz muss der Zahl plus 1 entsprechen.
3. In der Kontrollabfrage 44 wird der Lebenszeichenzähler LC2 mit dem Lebenszeichenzähler LC2* des letzten Zyklus verglichen, und die Differenz muss sich um 1 unterscheiden.
4. In der Kontrollabfrage 45 wird der CRC-Wert 1 als 16-Bit-Wert erfasst, und das Ergebnis muss 0 sein.
5. In der Kontrollabfrage 46 wird der GRC-Wert 2 als 16-Bit-Wert erfasst, und das Resultat muss ebenfalls 0 sein.
6. In der Kontrollabfrage 47 wird das Alarm-Bit A1 mit dem Alarmbit A2 verglichen, und das Ergebnis muss 0 sein.
7. In der Kontrollabfrage 48 wird der Systemstatus überprüft, und der Inhalt des Systemstatuszählers darf nicht einer bestimmten Zahl entsprechen.
8. In der Kontrollabfrage 57 erfolgt eine zyklische Redundanzprüfung (CRC) und das über einen 8-Bit-Wert, und das Ergebnis muss 0 sein.
9. In der Kontrollabfrage 49 erfolgt eine Differenzbildung zwischen zwei aufeinanderfolgenden Zyklen, die einen Wert von 5 Millisekunden nicht überschreiten darf. Das Resultat ist in Ordnung, wenn die Zeitdifferenz z.B. weniger als 5 Millisekunden entspricht.

Die oben genannten Kontrollabfragen sind nur ein Beispiel für die erfindungsgemäßen Kriterien in den beiden Auswerteeinheiten 20, 21, die jeweils die Kontrollabfragen getrennt durchführen, wobei jedoch eine Anzahl weiterer Kontrollabfragen vorhanden sein kann, wie zum Beispiel das Vorhandensein von Daten überhaupt und dergleichen mehr. Die oben genannte Aufzählung ist deshalb nicht abschliessend zu verstehen.

Im Unterschied zu der Kontrollabfrage nach Figur 5 zeigt die Kontrollabfrage nach Figur 6 als einzigen Unterschied, dass an der zweiten Position nunmehr ein Lagenvergleich zwischen der Position im Kanal 1 und einer Kopie dieser Lageninformation im Kanal 1 bitweise verglichen wird, und das Ergebnis muss gleich sein.

Ferner erfolgt in der Kontrollabfrage 46' eine Berechnung der zyklischen Redundanzprüfung CRC2 in einer 32-Bit-Form (und nicht in einer 16-Bit-Form), und das Resultat muss 0 sein.

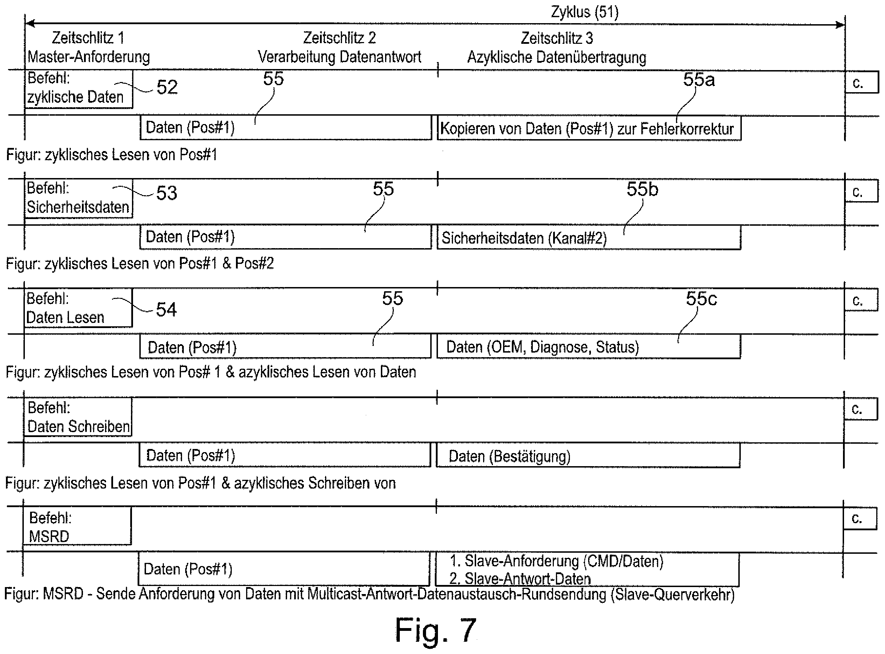

Die Figur 7 zeigt eine Daten-Übertragung in einem einzigen Zyklus 51, woraus sich der Wert der vorliegenden Erfindung ergibt, denn in einem einzigen Zyklus von im Bereich zwischen 30 Mikrosekunden bis einer Millisekunde (als Beispiel) werden sämtliche relevanten Daten übertragen, was mit einer seriellen Datenübertragung nach dem Stand der Technik nicht möglich war.

Hieraus ergibt sich, dass die schnelle Datenübertragung im Bereich eines Zyklus 51 besondere Vorteile hat, weil eine besonders schnelle Überprüfung der Daten erfolgt.

Ausgehend von einem Start-Kommando 52 erfolgt die Übertragung eines Antwort-Telegramms 55 bei der Position Nummer 1, was bedeutet, dass im Antwort-Telegramm 55 sämtliche Daten enthalten sind, die in Figur 8 als Daten des Datenkanals Nummer 1 angegeben sind.

In der zweiten Zyklushälfte erfolgt dann die Übertragung einer Kopie dieses Antwort-Telegramms 55 in Form des Datentelegramms 55a.

Wichtig ist nun, dass auf ein anders geartetes Start-Kommando 53 nunmehr ebenfalls in dem Antwort-Telegramm 55 die Daten gemäß Figur 8 übertragen werden, dass jedoch in der zweiten Zyklushälfte nunmehr in einem zweiten Antwort-Telegramm ein Teil 2 als 55b übertragen wird, in dem die Sicherheitsdaten des Kanals 2 enthalten sind.

Die Daten 55b sind die Daten, die aus dem zweiten Kanal kommen und mit den Daten des ersten Kanals übereinstimmen müssen.

Lediglich der Vollständigkeit halber ist in Figur 7 noch dargestellt, dass mithilfe von weiteren Start-Kommandos 54 auch andere Daten übertragen werden können, nämlich im Anschluss an das jeweilige Antwort-Telegramm 55, zum Beispiel Daten 55c, die zum Beispiel OEM-Daten, Diagnosedaten oder Statusdaten betreffen können.

Ebenso können Temperaturdaten und dergleichen übertragen werden, wie es in Figur 7 untenstehend angegeben ist.

Die Figur 8 zeigt ein Datenübertragungstelegramm im oberen Bereich, wobei angegeben ist, dass das Antwort-Tetegramm aus Multiturn-Daten M und aus weiteren Singleturn-Daten S besteht.

An diese Multiturn/Singletum-Daten schließen sich noch die Daten eines Lebenszeichenzählers, eines Alarmbits, eines Warnbits und des CRC an, wobei die gesamten Daten als Sicherheitsprotokoll bezeichnet sind.

Es wird noch angefügt, dass sich die in Figure 8 bezeichneten Felder LC* und LC2* aus einem Alarm-, einem Fehlerdatum und einem Lebenszeichenzähler zusammensetzen können.

Die untere Darstellung in Figur 8 zeigt ein Datentelegramm im zweiten Teil der Übertragung, zum Beispiel im Teil 55b.

Hier ist angegeben, dass die Daten im Kanal 2 nunmehr als Multiturn M und Singleturn S übertragen werden, wobei die Daten des Kanals 2 immer mit "2" bezeichnet sind.

Aus dieser Darstellung ergibt sich, dass die Daten des Kanals 2 in den eingezeichneten Grenzen übertragen werden und sich daran die Daten des Sicherheitsprotokolls anschließen.

Der CRC3 wird aus den Bits gebildet, die linksstehend mit CRC3-Range angegeben sind, während der Lebenszeichenzähler RC8 aus der gesamten Bitstrecke gebildet wird, die untenstehend mit CRC2-Range angegeben sind.

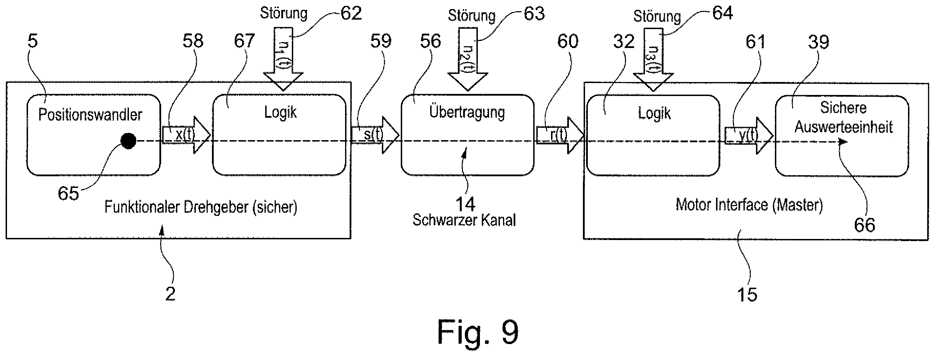

In Figur 9 ist ein Funktionsbild einer sicheren Datenübertragung schematisiert dargestellt, welches mit dem Funktionsbild nach Figur 1 im Wesentlichen übereinstimmt. Es handelt sich demnach um eine Verallgemeinerung des Funktionsbildes nach Figur 1. Aus Figur 9 ist erkennbar, dass im sicheren funktionalen Drehgeber 2 ein Positionswandler 5 angeordnet ist, der beispielsweise optisch, magnetisch induktiv oder kapazitiv arbeiten kann und in dem der Beginn 65 des sicheren Kanals 14 angelegt ist.

Die Signale des Positionswandiers 5 werden mit einer bestimmten ersten Übertragungsfunktion 58 ein- oder zweikanalig auf eine zugeordnete Logik 67 übertragen, die im Drehgeber 2 angeordnet ist, wobei im Funktionsbild nach Figur 9 angegeben ist, dass bereits schon in die Logik Drehgebers 2 eine erste Störung 62 ein- oder mehrkanalig einfließen kann, welche die nachfolgende zweite Übertragungsfunktion 59 am Ausgang der Logik des Drehgebers 2 verändert.

Eine zweite Störung 63, die ganz anders als die Störung 62 ausgebildet sein kann, könnte während der ein- oder mehrkanaligen Übertragung in die Übertragungsstrecke 56 einfließen, womit ebenfalls die am Ausgang des Übertragungsweges erscheinende dritte Übertragungsfunktion 60 durch die Störung 63 verändert wird.

Dies erfolgt alles im Bereich des schwarzen Kanals 14 und die am Ausgang der Übertragungsstrecke 56 sich ergebende dritte Übertragungsfunktion 60 bildet den Eingang für die in den Motorinterface (Master) 15 angeordnete Logik 32,. Auch auf diese Logik 32 kann eine vierte Störung 64 einwirken, die somit zu einer veränderten vierten Übertragungsfunktion 61 am Ausgang dieser Logik erscheint.

Das so vielfach veränderte Signal vom Beginn 65 bis zum Ende 66 des schwarzen Kanals 14 hat demnach vielfältige Modifikationen erfahren und erst in der sicheren Auswerteeinheit 39 werden die Einflüsse der Störungen 62-64 überprüft, und es erfolgt dann nur eine Weiterleitung der digitalen Signale, wenn am Ende 66 des schwarzen Kanals 14 eine einwandfreie Übertragung gemäß den Kontrollabfragen nach den Figuren 5 bis 8 festgestellt wurde.

Daraus ergibt sich der Vorteil der Erfindung, dass nämlich bereits schon vom Innenraum des Positionswandlers mit dem Beginn 65 eines schwarzen Kanals vielfältige Störungen 62-64 auf die verschiedenen Übertragungsmodule einwirken können und sich der schwarze Kanal 14 bis in den Innenraum der sicheren Auswerteeinheit 39 (zum Ende 66) erstreckt und dann erst dort eine sichere Übertragung gemäß den Kriterien der Figuren 5 bis 8 überprüft wird.

Wichtig bei der Erfindung ist demnach, dass mit kostengünstigen und einfachen Funktionsbausteinen eine unsichere Datenübertragung über lange Leitungsstrecken in Kauf genommen wird, und dass erst am Ende 65 der unsicheren Datenübertragung eine Überprüfung der unsicheren Datenübertragung auf bestimmte Sicherheitsmerkmale erfolgt, um dann bei Erfüllung dieser Sicherheitsmerkmale bestätigen zu können, dass es sich um eine fehlerfreie Datenübertragung gehandelt hatte.

### Zeichnungslegende

- 1: Systemarchitektur
- 2: funktionaler Drehgeber (sicher)
- 3: mechanische Schnittstelle
- 4: mechanisches Interface
- 5: Positionswandler
- 6: Spuren
- 7: Spuren
- 8: optische Codierscheibe
- 9: Signalkanal
- 10: Signalkanal
- 11: Datenkanal
- 12: Datenkanal
- 13: elektrischer Interface (Slave)
- 14: Schwarzer Kanal (Übertragungsstrecke)
- 15: Motor-Interface (Master)
- 16: Kontrolleinheit
- 17: Motor
- 18: Datenkanal
- 19: Datenkanal
- 20: Auswerteeinheit (zweikanalig)
- 21: Auswerteeinheit (zweikanalig)
- 22: Kreuzvergleichsmodul
- 23: Ausgangskanal (Auswertung)
- 24: Ausgangskanal (Auswertung)
- 25: Funktionsbaustein (Auswertung)
- 26: Abschaltkanal
- 27: Antriebsregler
- 28: Temperatursensor
- 29: Stromversorgung
- 29a: Leitung
- 30: Leitungstreiber
- 31: Übertragungskanal
- 32: Logik-Baustein
- 33: Speicherbereich
- 34: Speicherbereich
- 35: Interface
- 36: Interface (sichere Auswertung)
- 37: Übertragungskanal
- 38: Übertragungskanal
- 39: sichere Auswerteeinheit
- 40: Funktionsbaustein
- 41: Motor-Kontrolleinheit
- 42: Kontrollabfrage
- 43: Kontrollabfrage
- 44: Kontrollabfrage
- 45: Kontrollabfrage
- 46: Kontrollabfrage
- 47: Kontrollabfrage
- 48: Kontrollabfrage
- 49: Kontrollabfrage
- 50: Kontrollabfrage
- 51: Zyklus
- 52: Start-Kommando
- 53: Start-Kommando
- 54: Start-Kommando
- 55: Antwort-Telegramm (Teil 1)
- 55a: Teil 2 (Antwort)
- 55b: Teil 2 (Antwort)
- 55c: Teil 2 (Antwort)
- 56a: Datenübertragungsstrecke
- 56b: Datenübertragungsstrecke
- 57: Kontrollabfrage
- 58: Übertragungsfunktion
- 59: ,','
- 60: ,','
- 61: ,','
- 62: Störung
- 63: ,','
- 64: ,','
- 65: Begin von 14
- 66: Ende von 14
- 67: Logik

## Patentansprüche

1. Verfahren zur Datenübertragung zwischen einem funktional sicheren Drehgeber (2) und einer Motor- und/oder Aktor-Kontrolleinheit (16, 17, 27, 41) über einen unsicheren mehrkanaligen Kanal (14), **dadurch gekennzeichnet, dass** der unsichere mehrkanalige Kanal als schwarzer Kanal (14) ausgebildet ist, der einen nicht-sicheren Übertragungskanal und ein zusätzliches Sicherungsprotokoll umfasst, und von einer übergeordneten oder nachgeschalteten Auswerteeinheit (39) überprüft wird,
dass mittels des Sicherungsprotokolls zusätzliche, eine überprüfbare Redundanz erzeugende Daten über die Integrität und Sicherheit der über den schwarzen Kanal übertragenen Daten an die, zwei voneinander unabhängige Auswerteeinheiten (20, 21) umfassende Auswerteeinheit (39) übermittelt werden, dass die Daten anhand einer Reihe von Kontrollabfragen von den unabhängigen Auswerteeinheiten (20, 21) als sicher erkannt werden, wobei am Ausgang der beiden unabhängigen Auswerteeinheiten (20, 21) zwei Ausgangskanäle (23, 24) geschaltet sind, über welche die als sicher erkannten Daten mindestens zweikanalig einem Funktionsbaustein (25) zugeführt werden, der Ansteuersignale für die Motor- und/oder Aktor-Kontrolleinheit (16, 17, 27, 41) bildet und mit dieser in Verbindung steht.

2. Verfahren nach Anspruch 1, **dadurch gekennzeichnet, dass** sich der schwarze Kanal (14) durchgängig von einer im funktional sicheren Drehgeber (2) erfolgenden Positionswandlung (5) bis zur Auswerteeinheit (39) erstreckt, und dass Störungen (62, 63, 64) allgemeiner Art auch innerhalb des Encoders (2, 5, 67) und innerhalb der motorsteuerungsseitigen Logik (32) erfassbar sind.

3. Verfahren nach Anspruch 1 oder 2, **dadurch gekennzeichnet, dass** am Ausgang (18, 19) des schwarzen Kanals (14) die sichere Auswerteeinheit (39) angeordnet ist, welche die Daten des schwarzen Kanals (14) überprüft und erst bei Bestätigung der Sicherheit der überprüften Daten die nachgeschaltete Motor- und/oder Aktoreinheit (16, 17, 27, 41) ansteuert.

4. Verfahren nach einem der Ansprüche 1 bis 3, **dadurch gekennzeichnet, dass** die Datenübertragung über den schwarzen Kanal (14) mindestens zweikanalig erfolgt.

5. Verfahren nach einem der Ansprüche 1 bis 4, **dadurch gekennzeichnet, dass** zwischen den beiden Auswerteeinheiten (20, 21) ein Kreuzvergleichsmodul (22) angeordnet ist, das die Signale der beiden Auswerteeinheiten (20, 21) mindestens auf Identität überprüft.

6. Verfahren nach Anspruch 5, **dadurch gekennzeichnet, dass** die Signale der beiden Auswerteeinheiten (20, 21) zusätzlich mindestens auf Synchronität und Konvergenz überprüft werden.

7. Verfahren nach einem der Ansprüche 1 bis 6, **dadurch gekennzeichnet, dass** erst für den Fall, dass alle Signale der beiden Auswerteeinheiten (20, 21) und der dazwischengeschalteten Kreuzvergleichseinheit (22) übereinstimmen, ein "Gutbefund" am Ausgang der Auswerteeinheit (39) erfolgt und die nachgeschaltete Motor- und/oder Aktoreinheit (16, 17, 27, 41) angesteuert wird.

8. Verfahren nach einem der Ansprüche 1 bis 7, **dadurch gekennzeichnet, dass** die Auswerteeinheit (39) eine Reihe von Kontrollabfragen (42-50) der ihr auf allen Kanälen (18, 19) übermittelten Signale ausführt, die mit bestimmten Resultaten einer Überprüfungseinheit erfüllt werden müssen, und erst wenn alle vorhandenen Kontrollabfragen (42-50) kumulativ erfüllt sind, wird am Ausgang (23, 24) der Auswerteeinheit (39) ein Ausgangssignal für die ein- oder mehrkanalige Ansteuerung der Motor- und/oder Aktoreinheit (16, 17, 27, 41) erzeugt.

9. Vorrichtung zur Datenübertragung zwischen einem funktional sicheren Drehgeber (2) und einer Motor- und/oder Aktor-Kontrolleinheit (16, 17, 27, 41), **dadurch gekennzeichnet, dass** die Vorrichtung folgendes umfasst: ein Slave-Interface (13) am Ausgang des funktional sicheren Drehgebers (2),
einen schwarzen Kanal (14), der an des Slave-Interface (13) angeschlossen ist, wobei der schwarze Kanal (14) als Zwei- oder Vierdrahtleitung ausgebildet ist und einen nicht-sicheren Übertragungskanal und ein zusätzliches Sicherungsprotokoll umfasst,
ein Master-Interface (15), das auf der Seite der Motor- und/oder Aktor-Kontrolleinheit (16, 17, 27, 41) am schwarzen Kanal (14) angeschlossen ist,
eine Auswerteinheit (39), die mit dem Master-Interface (15) verbunden ist und die zwei voneinander unabhängige Ausweiteeinheiten (20, 21) umfasst, an welche mittels des Sicherungsprotokolls zusätzliche, eine überprüfbare Redundanz erzeugende Daten über die Integrität und Sicherheit der über den schwarzen Kanal (14) übertragenen Daten übermittelbar sind,
zwei Ausgangskanäle (23, 24), die am Ausgang der beiden unabhängigen Auswerteeinheiten (20, 21) geschaltet sind, und
einen Funktionsbaustein (25), dem über die beiden Ausgangskanäle (23, 24) die anhand einer Reihe von Kontrollabfragen von den unabhängigen Auswerteeinheiten (20, 21) als sicher erkannten Daten mindestens zweikanalig zuführbar sind und der Ansteuersignale für die Motor- und/oder Aktor-Kontrolleinheit (16, 17, 27, 41) bildet und mit dieser in Verbindung steht.

10. Vorrichtung nach Anspruch 9, **dadurch gekennzeichnet, dass** im Bereich der zweikanalig ausgebildeten Auswerteeinheit (39) ein Kreuzvergleichsmodul (22) für einen Kreuzvergleich der Kanäle angeordnet ist.

11. Vorrichtung nach einem der Ansprüche 9 oder 10, **dadurch gekennzeichnet, dass** sich die zweikanalige Ausbildung nicht auf Anzahl der Leitungen im Kabel, sondern auf die Anzahl von voneinander unabhängig ermittelten Positionen (Pos#1, Pos#2) aus einem Positionswandler (5) des Drehgebers (2) bezieht.

12. Vorrichtung nach einem der Ansprüche 9 bis 11, **dadurch gekennzeichnet, dass** die Auswerteeinheit (39) in der Motor-Kontrolleinheit (15, 16, 41) angeordnet ist.

13. Vorrichtung nach einem der Ansprüche 9 bis 12, **dadurch gekennzeichnet, dass** sich der schwarze Kanal (14) durch die motorseitige Kontrolleinheit (15, 16, 41) erstreckt.

## Claims

1. Method for data transmission between a functionally secure rotary encoder (2) and a motor and/or actuator control unit (16, 17, 27, 41) via a non-secure multi-channel channel (14), **characterised in that** the non-secure multi-channel channel is formed as a black channel (14) which comprises a non-secure transmission channel and an additional security protocol, and is verified by a higher-level or downstream evaluating unit (39), **in that** by means of the security protocol, additional data generating verifiable redundancy about the integrity and security of the data transmitted via the black channel are conveyed to the evaluating unit (39) comprising two evaluating units (20, 21) which are independent of one another, **in that** the data are identified as secure by the independent evaluating units (20, 21) using a series of control queries, wherein two output channels (23, 24), via which the data identified as secure are supplied using at least two channels to a functional module (25) which forms control signals for the motor and/or actuator control unit (16, 17, 27, 41) and is connected to the latter, are connected at the output of the two independent evaluating units (20, 21).

2. Method according to claim 1, **characterised in that** the black channel (14) usually extends from position conversion (5) taking place in the functionally secure rotary encoder (2) as far as the evaluating unit (39), and **in that** disturbances (62, 63, 64) of the general type are also detectable within the encoder (2, 5, 67) and within the logic circuit (32) on the motor control side.

3. Method according to claim 1 or 2, **characterised in that** the secure evaluating unit (39), which verifies the data of the black channel (14) and only on confirming the security of the verified data controls the downstream motor and/or actuator unit (16, 17, 27, 41), is arranged at the output (18, 19) of the black channel (14).

4. Method according to one of claims 1 to 3, **characterised in that** data transmission takes place via the black channel (14) using at least two channels.

5. Method according to one of claims 1 to 4, **characterised in that** a cross-comparison module (22), which verifies the signals of the two evaluating units (20, 21) at least for identity, is arranged between the two evaluating units (20, 21).

6. Method according to claim 5, **characterised in that** the signals of the two evaluating units (20, 21) are verified additionally at least for synchronicity and convergence.

7. Method according to one of claims 1 to 6, **characterised in that** only for the case that all signals of the two evaluating units (20, 21) and the cross-comparison unit (22) connected in-between agree, does a "good result" take place at the output of the evaluating unit (39) and the downstream motor and/or actuator unit (16, 17, 27, 41) is controlled.

8. Method according to one of claims 1 to 7, **characterised in that** the evaluating unit (39) executes a series of control queries (42-50) of the signals conveyed to it on all channels (18, 19) and which have to be filled with certain results of a verifying unit, and only when all existing control queries (42-50) are filled cumulatively is an output signal for the single-channel or multi-channel control of the motor and/or actuator unit (16, 17, 27, 41) generated at the output (23, 24) of the evaluating unit (39).

9. Device for data transmission between a functionally secure rotary encoder (2) and a motor and/or actuator control unit (16, 17, 27, 41), **characterised in that** the device comprises the following:
a slave interface (13) at the output of the functionally secure rotary encoder (2),
a black channel (14) which is connected to the slave interface (13), wherein the black channel (14) is formed as a two-wire or four-wire line and comprises a non-secure transmission channel and an additional security protocol,
a master interface (15) which is connected on the side of the motor and/or actuator control unit (16, 17, 27, 41) to the black channel (14),
an evaluating unit (39), which is connected to the master interface (15) which comprises two evaluating units (20, 21) which are independent of one another, to which additional data generating a verifiable redundancy about the integrity and security of the data transmitted via the black channel (14) can be conveyed by means of the security protocol,
two output channels (23, 24) which are connected at the output of the two independent evaluating units (20, 21), and
a functional module (25) to which via the two output channels (23, 24) the data identified as secure by the independent evaluating units (20, 21) using a series of control queries can be supplied using at least two channels and which forms control signals for the motor and/or actuator control unit (16, 17, 27, 41) and is connected to the latter.

10. Device according to claim 9, **characterised in that** a cross-comparison module (22) for a cross-comparison of the channels is arranged in the region of the evaluating unit (39) formed as two channels.

11. Device according to one of claims 9 or 10, **characterised in that** the two-channel design does not relate to number of lines in the cable, but to the number of positions (Pos#1, Pos#2) determined independently of one another from a position converter (5) of the rotary encoder (2).

12. Device according to one of claims 9 to 11, **characterised in that** the evaluating unit (39) is arranged in the motor control unit (15, 16, 41).

13. Device according to one of claims 9 to 12, **characterised in that** the black channel (14) extends through the motor-side control unit (15, 16, 41).

## Revendications

1. Procédé pour la transmission de données entre un capteur de rotation (2) fonctionnellement sécurisé et une unité de contrôle moteur et/ou d'actionneur (16, 17, 27, 41) par l'intermédiaire d'un canal à canaux multiples non sécurisé (14), **caractérisé en ce que**
le canal à canaux multiples non sécurisé est agencé en tant que canal noir (14) qui comprend un canal de transmission non sécurisé et un protocole de sécurisation additionnel et est vérifié par une unité d'évaluation (39) supérieure ou montée en aval, qu'au moyen du protocole de sécurisation, des données additionnelles, générant une redondance vérifiable sur l'intégrité et la sécurité des données transmises par l'intermédiaire du canal noir, sont transmises à l'unité d'évaluation (39) comprenant deux unités d'évaluation (20, 21) indépendantes l'une de l'autre, que les données sont reconnues comme sécurisées par les unités d'évaluation (20, 21) indépendantes sur la base d'une série d'interrogations de contrôle, dans lequel à la sortie des deux unités d'évaluation (20, 21) indépendantes sont montés deux canaux de sortie (23, 24) par l'intermédiaire desquels les données reconnues comme sécurisées sont amenées sur au moins deux canaux à un composant fonctionnel (25) qui forme des signaux de commande pour l'unité de contrôle moteur et/ou d'actionneur (16, 17, 27, 41) et est en relation avec celle-ci.

2. Procédé selon la revendication 1, **caractérisé en ce que** le canal noir (14) s'étend de manière continue d'une conversion de position (5) ayant lieu dans le capteur de rotation (2) fonctionnellement sécurisé jusqu'à l'unité d'évaluation (39), et que des défauts (62, 63, 64) d'un type général sont détectables même à l'intérieur de l'encodeur (2, 5, 67) et à l'intérieur de la logique côté commande moteur (32).

3. Procédé selon la revendication 1 ou 2, **caractérisé en ce qu'**à la sortie (18, 19) du canal noir (14) est disposée l'unité d'évaluation (39) sécurisée, qui vérifie les données du canal noir (14) et commande l'unité de contrôle moteur et/ou d'actionneur (16, 17, 27, 41) montée en aval seulement à la confirmation de la sécurité des données vérifiées.

4. Procédé selon l'une revendications 1 à 3, **caractérisé en ce que** la transmission de données par le canal noir (14) se fait sur au moins deux canaux.

5. Procédé selon l'une revendications 1 à 4, **caractérisé en ce qu'**entre les deux unités d'évaluation (20, 21) est disposé un module de comparaison croisée (22) qui vérifie au moins l'identité des signaux des deux unités d'évaluation (20, 21).

6. Procédé selon la revendication 5, **caractérisé en ce que** les signaux des deux unités d'évaluation (20, 21) sont soumis en plus à une vérification de la synchronicité et de la convergence.

7. Procédé selon l'une des revendications 1 à 6, **caractérisé en ce qu'**un "constat positif' survient à la sortie de l'unité d'évaluation (39) et l'unité de contrôle moteur et/ou d'actionneur (16, 17, 27, 41) montée en aval est commandée seulement dans le cas où tous les signaux des deux unités d'évaluation (20, 21) et de l'unité de comparaison croisée (22) montée entre les deux concordent.

8. Procédé selon l'une revendications 1 à 7, **caractérisé en ce que** l'unité d'évaluation (39) exécute une série d'interrogations de contrôle (42-50) des signaux qui lui sont transmis sur tous les canaux (18, 19) qui doivent être satisfaites avec des résultats définis d'une unité de vérification, et qu'un signal de sortie est généré à la sortie (23, 24) de l'unité d'évaluation (39) pour la commande à un ou plusieurs canaux de l'unité de contrôle moteur et/ou d'actionneur (16, 17, 27, 41) seulement lorsque toutes les interrogations de contrôle (42-50) présentes sont satisfaites de manière cumulative.

9. Dispositif pour la transmission de données entre un capteur de rotation (2) fonctionnellement sécurisé et une unité de contrôle moteur et/ou d'actionneur (16, 17, 27, 41), **caractérisé en ce que** le dispositif comprend ce qui suit :
une interface esclave (13) à la sortie du capteur de rotation (2) fonctionnellement sécurisé, un canal noir (14) qui est raccordé à l'interface esclave (13), dans lequel le canal noir (14) est agencé en tant que ligne à deux ou quatre fils et comprend un canal de transmission non sécurisé et un protocole de sécurisation additionnel,
une interface maître (15) qui est raccordée au canal noir (14) du côté de l'unité de contrôle moteur et/ou d'actionneur (16, 17, 27, 41),
une unité d'évaluation (39) qui est reliée à l'interface maître (15) et qui comprend deux unités d'évaluation (20, 21) indépendantes l'une de l'autre, auxquelles peuvent être transmises des données additionnelles sur l'intégrité et la sécurité des données transmises par l'intermédiaire du canal noir (14), générant une redondance vérifiable au moyen du protocole de sécurisation,
deux canaux de sortie (23, 24) qui sont montés à la sortie des deux unités d'évaluation (20, 21) indépendantes, et
un composant fonctionnel (25) auquel peuvent être amenées des données reconnues comme sécurisées par les unités d'évaluation (20, 21) indépendantes l'une de l'autre sur la base d'une série d'interrogations de contrôle sur au moins deux canaux par les deux canaux de sortie (23, 24) et qui forme des signaux de commande pour l'unité de contrôle moteur et/ou d'actionneur (16, 17, 27, 41) et est en relation avec celle-ci.

10. Dispositif selon la revendication 9, **caractérisé en ce que** dans la zone de l'unité d'évaluation (39) formée sur deux canaux est disposé un module de comparaison croisée (22) pour une comparaison croisée des canaux.

11. Dispositif selon l'une des revendications 9 à 10, **caractérisé en ce que** la formation sur deux canaux se réfère non pas au nombre de lignes dans le câble, mais au nombre de positions (Ps#1, Pos#2) déterminées indépendamment l'une de l'autre depuis un convertisseur de position (5) du capteur de rotation (2).

12. Dispositif selon l'une des revendications 9 à 11, **caractérisé en ce que** l'unité d'évaluation (39) est disposée dans l'unité de contrôle moteur et/ou d'actionneur (15, 16, 41).

13. Dispositif selon l'une des revendications 9 à 12, **caractérisé en ce que** le canal noir (14) s'étend à travers l'unité de contrôle côté moteur (15,16, 41).
